# FASCICULE DE BREVET EUROPEEN

(11) **EP 3 862 276 B1**
(45) Date de publication et mention de la délivrance du brevet: **30.03.2022**
(21) Numéro de dépôt: 21150971.6
(22) Date de dépôt: 11.01.2021
(51) Int. Cl.: B64D 47/00, B64C 7/00, B64D 45/00

(54) **DISPOSITIF DE SÉCURISATION D'UNE ENTRÉE D'AIR DE TYPE NACA**
VORRICHTUNG ZUR SICHERUNG EINES LUFTEINLASSES VOM TYP NACA
DEVICE FOR SECURING A NACA TYPE AIR INLET

(30) Priorité: 10.02.2020 FR 2001263
(43) Date de publication de la demande: 11.08.2021
(73) Titulaire: AIRBUS OPERATIONS (S.A.S.), 31060 Toulouse (FR)
(72) Inventeur: SALZE, Philippe, 31060 TOULOUSE Cedex 9 (FR)
(74) Mandataire: Sarraméa, Claude

(56) Documents cités:
- WO-A1-2009/147161
- FR-A1- 3 014 846
- US-A- 4 174 083

## Description

### DOMAINE TECHNIQUE

La présente invention concerne la sécurisation des entrées d'air, en particulier, des entrées d'air de type NACA.

### ÉTAT DE LA TECHNIQUE

Les entrées d'air de type NACA équipent généralement des véhicules tels que des aéronefs ou des voitures de course. Elles correspondent à des entrées d'air noyées dans le carénage du véhicule. Elles présentent une forme particulière permettant une bonne aspiration d'air, tout en ayant une faible trainée lorsque ledit véhicule se déplace.

Dans le cas d'un aéronef, ces entrées d'air sont souvent équipées d'un volet permettant alternativement de fermer et d'ouvrir ladite entrée d'air. Par ailleurs, ces entrées d'air sont souvent placées au niveau du carénage ventral (ventre mou). Elles sont donc facilement accessibles par la main de personnes à proximité de la zone du volet, lorsque l'aéronef est au sol. Il peut donc exister un risque de coincement de doigts si l'une des personnes à proximité venait à avancer sa main dans la zone du volet.

Afin d'empêcher l'accès à la zone du volet, une bâche est habituellement fixée par un dispositif de fixation de type « Velcro » pour obturer l'entrée d'air. Toutefois, la pose et la fixation de la bâche est peu pratique et prend du temps. En effet, il était nécessaire de coller une bande de fixation sur le carénage de l'aéronef et sur la bâche avant de fixer la bâche sur l'entrée d'air.

Un dispositif de sécurisation d'une entrée d'air à travers une surface d'écoulement est connu du document WO 2009/147161 A1.

### EXPOSÉ DE L'INVENTION

La présente invention a pour objet de pallier ces inconvénients en proposant un dispositif de sécurisation d'une entrée d'air de type NACA.

À cet effet, l'invention concerne un dispositif de sécurisation d'une entrée d'air à travers une surface d'écoulement, l'entrée d'air étant destinée à guider au moins une partie d'écoulement d'air s'écoulant sur la surface d'écoulement vers une entrée de conduite située sous la surface d'écoulement, l'entrée d'air comprenant une ouverture pratiquée sur la surface d'écoulement, une rampe et au moins deux parois latérales, l'ouverture étant délimitée par une lèvre et deux bords latéraux, les deux bords latéraux s'étendant symétriquement de part et d'autre de la lèvre en se rapprochant progressivement l'un de l'autre, les parois latérales s'étendant respectivement entre les bords latéraux et la rampe, la rampe s'étendant entre la surface d'écoulement et une région sous la surface d'écoulement, l'entrée de conduite étant définie entre la lèvre et la rampe.

Selon l'invention, le dispositif comprend au moins une plaque destinée à obturer l'ouverture au moins en partie, la plaque étant pourvue d'une contre-lèvre et d'au moins deux éléments élastiques configurés pour exercer respectivement un effort contre les deux parois latérales afin de plaquer la contre-lèvre sur la lèvre quand le dispositif est installé dans l'entrée d'air.

Ainsi, grâce audit dispositif, la sécurisation d'une entrée d'air de type NACA peut être réalisée facilement et rapidement. La plaque permet d'empêcher l'introduction d'une main dans la zone de volet. Par ailleurs, l'action combinée de la contre-lèvre et des éléments élastiques permet d'installer le dispositif de manière facile sans nécessiter l'utilisation d'éléments de fixation consommables de type « Velcro ».

Avantageusement, chacun des au moins deux éléments élastiques possède une première branche et une deuxième branche présentant chacune une extrémité libre s'écartant l'une de l'autre pour former un ressort à lame en V, la première branche du premier élément élastique des au moins deux éléments élastiques étant fixée sur un premier bord de la plaque, la deuxième branche du premier élément élastique étant configurée pour exercer un effort contre une première paroi des au moins deux parois latérales quand le dispositif est installé dans l'entrée d'air, la première branche du deuxième élément élastique des au moins deux éléments élastiques étant fixée sur un deuxième bord de la plaque symétrique du premier bord de la plaque, la deuxième branche du deuxième élément élastique étant configurée pour exercer un effort contre une deuxième paroi des au moins deux parois latérales quand le dispositif est installé dans l'entrée d'air, l'effort exercé contre la première paroi et l'effort exercé contre la deuxième paroi étant susceptibles de plaquer la contre-lèvre contre la lèvre.

De plus, chacun des au moins deux éléments élastiques comprend une troisième branche, la troisième branche étant solidaire de la deuxième branche, la troisième branche présentant une extrémité libre s'écartant de la deuxième branche en s'approchant de la première branche, la troisième branche possédant une surface d'appui, la surface d'appui étant configurée pour pouvoir exercer un effort permettant le rapprochement de l'extrémité libre de la deuxième branche vers la première branche.

Selon une particularité, la plaque comprend au moins deux parties parallèles dont une première partie et une deuxième partie, la première partie de la plaque présentant une forme générale de trapèze isocèle possédant une grande base et une petite base, la deuxième partie de la plaque présentant une forme générale de rectangle, la première partie étant fixée à la deuxième partie de façon que la petite base du trapèze de la première partie soit connectée à un premier côté du rectangle de la deuxième partie.

Selon une autre particularité, la première branche du premier élément élastique est fixée à la deuxième partie de la plaque de façon que la première branche du premier élément élastique est fixée à un deuxième côté du rectangle perpendiculaire au premier côté du rectangle, la première branche du deuxième élément élastique étant fixée à la deuxième partie de la plaque de façon que la première branche du deuxième élément élastique est fixée à un troisième côté du rectangle opposé au deuxième côté du rectangle, la contre-lèvre étant fixée à la grande base du trapèze.

Par ailleurs, la plaque est fabriquée, au moins en partie, à partir d'une matière transparente.

À titre d'exemple, au moins la première partie de la plaque est fabriquée à partir d'une matière transparente.

Avantageusement, la contre-lèvre et la deuxième partie sont fixées sur une même face de la première partie, ladite face de la première partie étant destinée à être dirigée vers l'intérieur de l'entrée d'air lorsque le dispositif de sécurisation est installé sur l'entrée d'air.

L'invention concerne également un procédé d'installation du dispositif de sécurisation tel que décrit ci-dessus,

Selon l'invention, le procédé comprend les étapes suivantes :
- une étape d'apposition de la contre-lèvre sur la lèvre ;
- une étape d'application d'un effort sur chacun des éléments élastiques pour que la plaque obture l'entrée d'air au moins en partie ;
- une étape de relâchement de l'effort appliqué sur chacun des éléments élastiques pour que chacun des éléments élastiques exerce respectivement un effort contre les deux parois latérales afin de plaquer la contre-lèvre sur la lèvre quand le dispositif est installé dans l'entrée d'air.

Avantageusement, l'étape d'application consiste à exercer un effort sur la surface d'appui de la troisième branche de chacun des éléments élastiques.

### BRÈVE DESCRIPTION DES FIGURES

L'invention, avec ses caractéristiques et avantages, ressortira plus clairement à la lecture de la description faite en référence aux dessins annexés dans lesquels :
- La figure 1 représente une vue en perspective d'une entrée d'air de type NACA.
- La figure 2 représente une vue de dessus du dispositif de sécurisation.
- La figure 3 représente une coupe transversale A-A du dispositif de sécurisation.
- La figure 4 représente un dispositif de sécurisation mis en place dans une entrée d'air par un opérateur.
- La figure 5 représente une vue en perspective d'un dispositif de sécurisation installé dans une entrée d'air.
- La figure 6 représente schématiquement le procédé d'installation du dispositif de sécurisation dans une entrée d'air.
- La figure 7 représente une vue en perspective d'une portion de contre-lèvre.

### DESCRIPTION DÉTAILLÉE

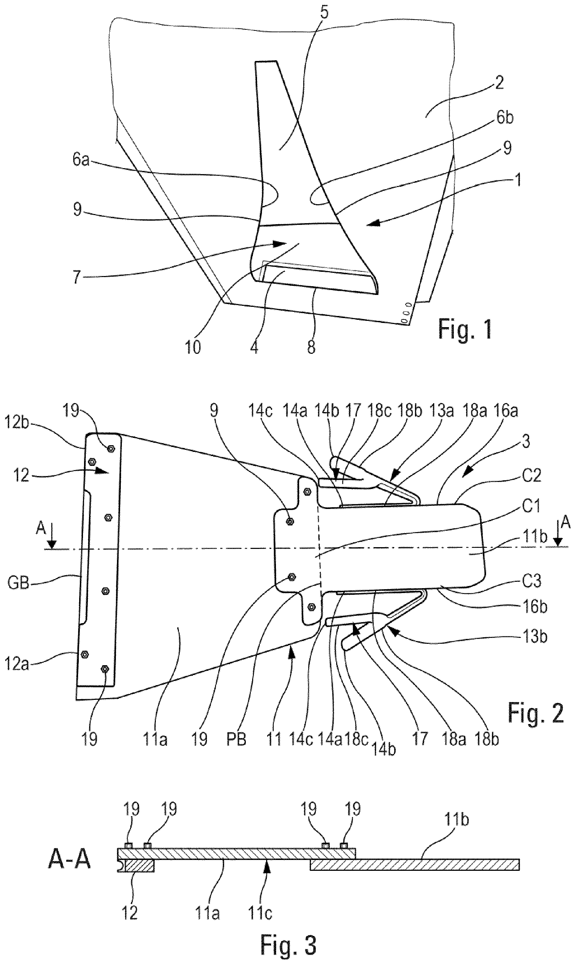

La figure 1 représente une entrée d'air 1 de type NACA sur une surface d'écoulement 2, en particulier un carénage 2 d'un aéronef. Le dispositif de sécurisation 3 est représenté sur la figure 2.

L'entrée d'air 1 est destinée à guider au moins une partie d'écoulement d'air s'écoulant sur la surface d'écoulement 2 vers une entrée de conduite 4 située sous la surface d'écoulement 2. L'entrée d'air 1 comprenant une ouverture 7 pratiquée sur la surface d'écoulement 2, une rampe 5 et au moins deux parois latérales 6a, 6b.

L'ouverture 7 est délimitée par une lèvre 8 et deux bords latéraux 9. Les deux bords latéraux 9 s'étendent symétriquement de part et d'autre de la lèvre 8 en se rapprochant progressivement l'un de l'autre.

Les parois latérales 6a, 6b s'étendent respectivement entre les bords latéraux 9 et la rampe 5 au droit de la surface d'écoulement 2.

La rampe 5 s'étend entre la surface d'écoulement 2 et une région sous la surface d'écoulement 2. L'expression « sous la surface d'écoulement » marque une position en opposition à l'expression « sur la surface d'écoulement » par rapport à la surface d'écoulement 2.

L'entrée de conduite 4 est définie entre la lèvre 8 et la rampe 5 au droit de la surface d'écoulement 2.

L'entrée d'air 1 peut être pourvue d'un volet 10. Le volet 10 permet alternativement de fermer et d'ouvrir l'entrée d'air 1.

Le dispositif de sécurisation 3 représenté sur la figure 1 comprend au moins une plaque 11 destinée à obturer l'ouverture 7 au moins en partie.

La plaque 11 est pourvue d'une contre-lèvre 12 et d'au moins deux éléments élastiques 13a, 13b, dont l'élément élastique 13a et l'élément élastique 13b. Les éléments élastiques 13a, 13b sont configurés pour exercer respectivement un effort contre les deux parois latérales 6a, 6b afin de plaquer la contre-lèvre 12 sur la lèvre 8 quand le dispositif de sécurisation 1 est installé dans l'entrée d'air 1.

Les figures 2 à 5 représentent un exemple de contre-lèvre 12. Sur ces figures, la contre-lèvre 12 comprend deux portions 12a et 12b séparées l'une de l'autre (figure 2).

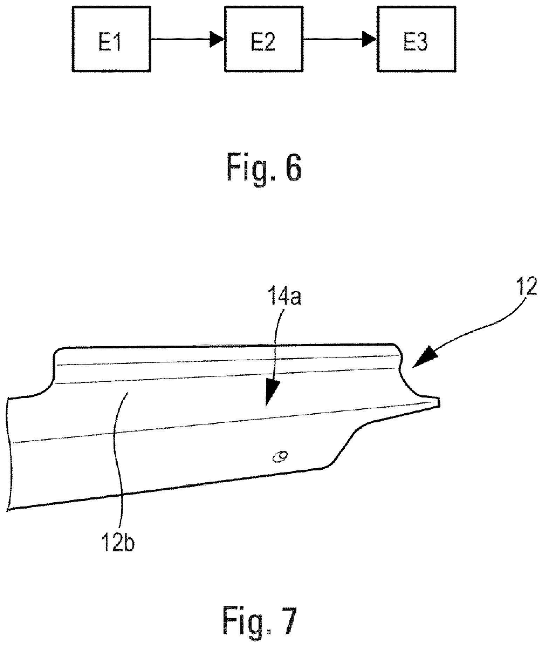

Par ailleurs, la contre-lèvre 12 présente une forme permettant à la fois de plaquer la contre-lèvre 12 contre la lèvre 8 mais également de ne pas gêner ou empêcher la fermeture et l'ouverture du volet 10. La figure 7 représente une portion 12b de contre-lèvre 12. La section transversale de la contre-lèvre 12 présente une forme permettant de recouvrir la lèvre 8 au moins en partie.

Chacun des deux éléments élastiques 13a et 13b possède une branche 18a et une branche 18b présentant chacune une extrémité libre 14a, 14b s'écartant l'une de l'autre pour former ensemble un ressort à lame en V.

La branche 18a de l'élément élastique 13a est fixée à un bord 16a de la plaque 11. La branche 18a est fixée parallèlement au bord 16a. La branche 18b de l'élément élastique 13a est configurée pour exercer un effort contre une paroi 6a des au moins deux parois latérales 6a, 6b quand le dispositif de sécurisation 3 est installé dans l'entrée d'air 1. De plus, la branche 18a de l'élément élastique 13b est fixée à un bord 16b de la plaque 11, le bord 16b étant symétrique au bord 16a de la plaque 11. La branche 18a est fixée parallèlement au bord 16b. La branche 18b de l'élément élastique 13b est configurée pour exercer un effort contre une paroi 6b des au moins deux parois latérales 6a, 6b quand le dispositif de sécurisation 3 est installé dans l'entrée d'air1. L'effort exercé contre la paroi 6a et l'effort exercé contre la paroi 6b sont susceptibles de plaquer la contre-lèvre 12 contre la lèvre 8.

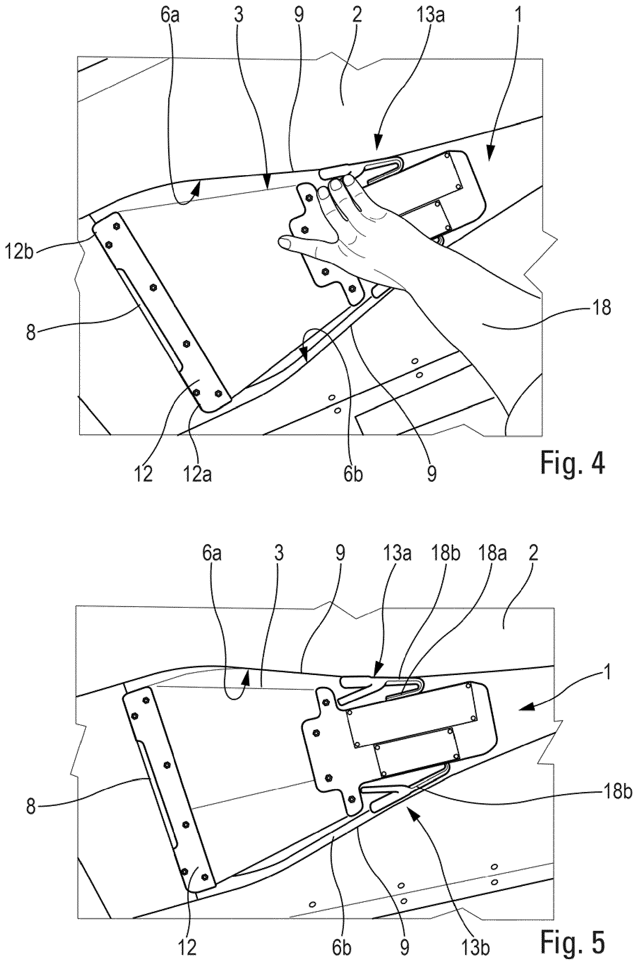

Chacun des deux éléments élastiques 13a et 13b peut comprend une branche 18c. La branche 18c étant solidaire de la branche 18b. De plus, la branche 18c présente une extrémité libre 14c s'écartant de la branche 18b en s'approchant de la branche 18a. La branche 18c possède une surface d'appui 17. La surface d'appui 17 est configurée pour pouvoir exercer un effort permettant le rapprochement de l'extrémité libre 14b de la branche 18b vers la branche 18a. La figure 4 représente la main d'un opérateur 18 exerçant un effort sur les surfaces d'appui 17 de chacun des éléments élastique 13a et 13b.

Avantageusement, la plaque 11 peut comprendre au moins deux parties 11a et 11b parallèles.

La partie 11a de la plaque 11 présente une forme générale de trapèze isocèle possédant une grande base GB et une petite base PB. La partie 11b de la plaque 11 présente une forme générale de rectangle. La partie 11a est fixée à la partie 11b de façon que la petite base PB du trapèze de la partie 11a soit connectée à un côté C1 du rectangle de la partie 11b.

Par ailleurs, la branche 18a de l'élément élastique 13a est fixée à la deuxième partie 11b de la plaque 11 de façon que la branche 18a de l'élément élastique 13a est fixée à un côté C2 du rectangle perpendiculaire au côté C1 du rectangle. La branche 18a de l'élément élastique 13b est fixée à la deuxième partie 11b de la plaque 11 de façon que la branche 18a de l'élément élastique 13b est fixée à un côté C3 du rectangle opposé au côté C2 du rectangle. La contre-lèvre 12 est fixée à la grande base GB du trapèze. La contre-lèvre 12 est fixée parallèlement à la grande base GB.

La plaque 11 est fabriquée, au moins en partie, à partir d'une matière transparente.

La transparence d'au moins une partie de la plaque 11 permet de contrôler la position du volet 10. Cela permet donc de savoir si le volet 10 est dans une position fermée ou une position ouverte.

Par exemple, au moins la partie 11a de la plaque 11 est fabriquée à partir d'une matière transparente. La deuxième partie 11b de la plaque 11 peut être fabriquée en métal.

De manière non limitative, la matière transparente peut correspondre à du polyméthacrylate de méthyle ou toute autre matière plastique transparente adaptée à l'utilisation du dispositif de sécurisation 3.

Les éléments élastiques 13a, 13b peuvent être fabriqués en acier trempé. Cela permet une installation aisée et durable du dispositif de sécurisation 3.

Avantageusement, la partie 11a est fixée à la partie 11b de façon que la partie 11a recouvre partiellement la partie 11b. La contre-lèvre 12 est fixée à la partie 11a de façon que la contre-lèvre 12 et la partie 11b soient coplanaires. Comme représenté sur la figure 3, la contre-lèvre 12 et la partie 11b peuvent être fixées sur une même face 11c de la partie 11a. La partie 11a est destinée à être plus éloignée de la rampe 5 que la partie 11b et la contre-lèvre 12 quand le dispositif de sécurisation 3 est installé sur l'entrée d'air 1. Autre dit, lorsque le dispositif de sécurisation 3 est installé sur l'entrée d'air 1, la face 11c de la partie 11a à laquelle sont fixée la partie 11b et la contre-lèvre 12 est destinée à être dirigée vers l'intérieur de l'entrée d'air 1.

Ainsi, grâce à ce positionnement de la contre-lèvre 12 et des parties 11a et 11b, la partie 11a est située à l'extérieur par rapport à la partie 11b et la contre-lèvre 12 lorsque le dispositif de sécurisation 3 est installé sur l'entrée d'air 1. Le volet 10 n'interfère donc pas avec le dispositif de sécurisation 3, lorsque ledit volet 10 s'ouvre ou se ferme. En effet, le décroché de la partie 11a par rapport à la contre-lèvre 12 et la partie 11b forme un espace suffisant pour que le volet 10 s'ouvre ou se ferme sans entrer en contact avec la plaque 11.

À titre d'exemple, la contre-lèvre 12 et la partie 11b sont fixées à la partie 11a à l'aide de boulons 19 ou de rivets ou tout autre élément de fixation (figure 3).

De façon non limitative, la partie 11a et/ou la partie 11b présentent une épaisseur comprise entre 4 mm et 5 mm.

L'invention concerne également un procédé d'installation du dispositif de sécurisation (figure 6).

Le procédé comprend les étapes suivantes :
- une étape E1 d'apposition de la contre-lèvre 12 sur la lèvre 8 ;
- une étape E2 d'application d'un effort sur chacun des éléments élastiques 13a, 13b pour que la plaque 11 obture l'entrée d'air 1 au moins en partie (figure 4) ;
- une étape E3 de relâchement de l'effort appliqué sur chacun des éléments élastiques 13a, 13b pour que chacun des éléments élastiques 13a, 13b exerce respectivement un effort contre les deux parois latérales 6a, 6b afin de plaquer la contre-lèvre 12 sur la lèvre 8 quand le dispositif de sécurisation 3 est installé dans l'entrée d'air 1.

Par ailleurs, l'étape E2 d'application peut consister à exercer un effort sur la surface d'appui 17 (par un opérateur 18) de la branche 18c de chacun des éléments élastiques 13a et 13b.

## Revendications

1. Dispositif de sécurisation (3) d'une entrée d'air (1) à travers une surface d'écoulement (2), l'entrée d'air (1) étant destinée à guider au moins une partie d'écoulement d'air s'écoulant sur la surface d'écoulement (2) vers une entrée de conduite (4) située sous la surface d'écoulement (2), l'entrée d'air (1) comprenant une ouverture (7) pratiquée sur la surface d'écoulement (2), une rampe (5) et au moins deux parois latérales (6a, 6b), l'ouverture (7) étant délimitée par une lèvre (8) et deux bords latéraux (9), les deux bords latéraux (9) s'étendant symétriquement de part et d'autre de la lèvre (8) en se rapprochant progressivement l'un de l'autre, les parois latérales (6a, 6b) s'étendant respectivement entre les bords latéraux (9) et la rampe (5), la rampe (5) s'étendant entre la surface d'écoulement (2) et une région sous la surface d'écoulement (2), l'entrée de conduite (4) étant définie entre la lèvre (8) et la rampe (5),
**caractérisé en ce qu'**il comprend au moins une plaque (11) destinée à obturer l'ouverture (7) au moins en partie, la plaque (11) étant pourvue d'une contre-lèvre (12) et d'au moins deux éléments élastiques (13a, 13b) configurés pour exercer respectivement un effort contre les deux parois latérales (6a, 6b) afin de plaquer la contre-lèvre (12) sur la lèvre (8) quand le dispositif (3) est installé dans l'entrée d'air (1).

2. Dispositif selon la revendication 1,
**caractérisé en ce que** chacun des au moins deux éléments élastiques (13a, 13b) possède une première branche (18a) et une deuxième branche (18b) présentant chacune une extrémité libre (14a, 14b) s'écartant l'une de l'autre pour former un ressort à lame en V,
la première branche (18a) d'un premier élément élastique (13a) des au moins deux éléments élastiques (13a, 13b) étant fixée sur un premier bord (16a) de la plaque (11), la deuxième branche (18b) du premier élément élastique (13a) étant configurée pour exercer un effort contre une première paroi (6a) des au moins deux parois latérales (6a, 6b) quand le dispositif (3) est installé dans l'entrée d'air (1),
la première branche (18a) d'un deuxième élément élastique (13b) des au moins deux éléments élastiques (13a, 13b) étant fixée sur un deuxième bord (16b) de la plaque symétrique du premier bord (16a) de la plaque (11), la deuxième branche (18b) du deuxième élément élastique (13b) étant configurée pour exercer un effort contre une deuxième paroi (6b) des au moins deux parois latérales (6a, 6b) quand le dispositif (3) est installé dans l'entrée d'air (1), l'effort exercé contre la première paroi (6a) et l'effort exercé contre la deuxième paroi (6b) étant susceptibles de plaquer la contre-lèvre (12) contre la lèvre (8).

3. Dispositif selon la revendication 2,
**caractérisé en ce que** chacun des au moins deux éléments élastiques (13a, 13b) comprend une troisième branche (18c), la troisième branche (18c) étant solidaire de la deuxième branche (18b), la troisième branche (18c) présentant une extrémité libre (14c) s'écartant de la deuxième branche (18b) en s'approchant de la première branche (18a), la troisième branche (18c) possédant une surface d'appui (17), la surface d'appui (17) étant configurée pour pouvoir exercer un effort permettant le rapprochement de l'extrémité libre (14b) de la deuxième branche (18b) vers la première branche (18a).

4. Dispositif selon l'une quelconque des revendications 1 à 3,
**caractérisé en ce que** la plaque (11) comprend au moins deux parties (11a, 11b) parallèles dont une première partie (11a) et une deuxième partie (11b), la première partie (11a) de la plaque (11) présentant une forme générale de trapèze isocèle possédant une grande base (GB) et une petite base (PB), la deuxième partie (11b) de la plaque (11) présentant une forme générale de rectangle, la première partie (11a) étant fixée à la deuxième partie (11b) de façon que la petite base (PB) du trapèze de la première partie (11a) soit connectée à un premier côté (C1) du rectangle de la deuxième partie (11b).

5. Dispositif selon la revendication 4,
**caractérisé en ce que** la première branche (18a) du premier élément élastique (13a) est fixée à la deuxième partie (11b) de la plaque (11) de façon que la première branche (18a) du premier élément élastique (13a) est fixée à un deuxième côté (C2) du rectangle perpendiculaire au premier côté (C1) du rectangle, la première branche (18a) du deuxième élément élastique (13b) étant fixée à la deuxième partie (11b) de la plaque (11) de façon que la première branche (18a) du deuxième élément élastique (13b) est fixée à un troisième côté (C3) du rectangle opposé au deuxième côté (C2) du rectangle, la contre-lèvre (12) étant fixée à la grande base (GB) du trapèze.

6. Dispositif selon l'une quelconque des revendications 1 à 5,
**caractérisé en ce que** la plaque (11) est fabriquée, au moins en partie, à partir d'une matière transparente.

7. Dispositif selon l'une quelconque des revendications 4 à 6,
**caractérisé en ce que** au moins la première partie (11a) de la plaque (11) est fabriquée à partir d'une matière transparente.

8. Dispositif selon l'une quelconque des revendications 4 à 7,
**caractérisé en ce que** la contre-lèvre (12) et la deuxième partie (11b) sont fixées sur une même face (11c) de la première partie (11a), ladite face (11c) de la première partie (11a) étant destinée à être dirigée vers l'intérieur de l'entrée d'air (1) lorsque le dispositif de sécurisation (3) est installé sur l'entrée d'air (1).

9. Procédé d'installation du dispositif de sécurisation selon l'une quelconque des revendications 1 à 8,
**caractérisé en ce qu'**il comprend les étapes suivantes :
- une étape (E1) d'apposition de la contre-lèvre (12) sur la lèvre (8) ;
- une étape (E2) d'application d'un effort sur chacun des éléments élastiques (13a, 13b) pour que la plaque (11) obture l'entrée d'air (1) au moins en partie ;
- une étape (E3) de relâchement de l'effort appliqué sur chacun des éléments élastiques (13a, 13b) pour que chacun des éléments élastiques (13a, 13b) exerce respectivement un effort contre les deux parois latérales (6a, 6b) afin de plaquer la contre-lèvre (12) sur la lèvre (8) quand le dispositif (3) est installé dans l'entrée d'air (1).

10. Procédé selon la revendication 9,
**caractérisé en ce que** l'étape (E2) d'application consiste à exercer un effort sur la surface d'appui (17) de la troisième branche (18c) de chacun des éléments élastiques (13a, 13b).

## Patentansprüche

1. Vorrichtung (3) zum Sichern eines Lufteinlasses (1) durch eine Strömungsfläche (2), wobei der Lufteinlass (1) dazu bestimmt ist, zumindest einen Teil eines über die Strömungsfläche (2) strömenden Luftstroms zu einem unter der Strömungsfläche (2) befindlichen Leitungseinlass (4) zu leiten, wobei der Lufteinlass (1) eine auf der Strömungsfläche (2) ausgebildete Öffnung (7), eine Rampe (5) und mindestens zwei Seitenwände (6a, 6b) aufweist, wobei die Öffnung (7) durch eine Lippe (8) und zwei Seitenränder (9) begrenzt ist, wobei sich die beiden Seitenränder (9) symmetrisch auf beiden Seiten der Lippe (8) erstrecken und dabei allmählich aufeinander zulaufen, wobei sich die Seitenwände (6a, 6b) jeweils zwischen den Seitenrändern (9) und der Rampe (5) erstrecken, wobei sich die Rampe (5) zwischen der Strömungsfläche (2) und einem Bereich unter der Strömungsfläche (2) erstreckt, wobei der Leitungseinlass (4) zwischen der Lippe (8) und der Rampe (5) definiert ist,
**dadurch gekennzeichnet, dass** sie zumindest eine Platte (11) umfasst, die dazu bestimmt ist, die Öffnung (7) zumindest teilweise zu verschließen, wobei die Platte (11) mit einer Gegenlippe (12) und mindestens zwei elastischen Elementen (13a, 13b) versehen ist, die so konfiguriert sind, dass sie jeweils eine Kraft gegen die beiden Seitenwände (6a, 6b) ausüben, um die Gegenlippe (12) an die Lippe (8) zu drücken, wenn die Vorrichtung (3) im Lufteinlass (1) installiert ist.

2. Vorrichtung nach Anspruch 1,
**dadurch gekennzeichnet, dass** jedes der zumindest zwei elastischen Elemente (13a, 13b) einen ersten Zweig (18a) und einen zweiten Zweig (18b) besitzt, die jeweils ein freies Ende (14a, 14b) aufweisen, die sich voneinander wegerstrecken, um eine V-förmige Blattfeder auszubilden,
wobei der erste Zweig (18a) eines ersten elastischen Elements (13a) der zumindest zwei elastischen Elemente (13a, 13b) an einer ersten Kante (16a) der Platte (11) befestigt ist, wobei der zweite Zweig (18b) des ersten elastischen Elements (13a) so konfiguriert ist, dass er eine Kraft gegen die erste Wand (6a) der zumindest zwei Seitenwände (6a, 6b) ausübt, wenn die Vorrichtung (3) im Lufteinlass (1) installiert ist, wobei der erste Zweig (18a) eines zweiten elastischen Elements (13b) der zumindest zwei elastischen Elemente (13a, 13b) an einer zur ersten Kante (16a) der Platte (11) symmetrischen zweiten Kante (16b) der Platte befestigt ist, wobei der zweite Zweig (18b) des zweiten elastischen Elements (13b) so konfiguriert ist, dass er eine Kraft gegen eine zweite Wand (6b) der zumindest zwei Seitenwände (6a, 6b) ausübt, wenn die Vorrichtung (3) im Lufteinlass (1) installiert ist, wobei die gegen die erste Wand (6a) ausgeübte Kraft und die gegen die zweite Wand (6b) ausgeübte Kraft geeignet sind, die Gegenlippe (12) gegen die Lippe (8) zu drücken.

3. Vorrichtung nach Anspruch 2,
**dadurch gekennzeichnet, dass** jedes der zumindest zwei elastischen Elemente (13a, 13b) einen dritten Zweig (18c) umfasst, wobei der dritte Zweig (18c) fest mit dem zweiten Zweig (18b) verbunden ist, wobei der dritte Zweig (18c) ein freies Ende (14c) aufweist, das sich vom zweiten Zweig (18b) entfernt und sich dem ersten Zweig (18a) nähert, wobei der dritte Zweig (18c) eine Auflagefläche (17) besitzt, wobei die Auflagefläche (17) so konfiguriert ist, dass sie eine Kraft ausüben kann, die eine Annäherung des freien Endes (14b) des zweiten Zweigs (18b) an den ersten Zweig (18a) ermöglicht.

4. Vorrichtung nach einem der Ansprüche 1 bis 3, **dadurch gekennzeichnet, dass** die Platte (11) zumindest zwei parallele Teile (11a, 11b) umfasst, darunter einen ersten Teil (11a) und einen zweiten Teil (11b), wobei der erste Teil (11a) der Platte (11) eine allgemeine Form eines gleichschenkligen Trapezes aufweist, das eine große Grundseite (GB) und eine kleine Grundseite (PB) besitzt, wobei der zweite Teil (11b) der Platte (11) eine allgemeine Rechteckform aufweist, wobei der erste Teil (11a) so am zweiten Teil (11b) befestigt ist, dass die kleine Grundseite (PB) des Trapezes des ersten Teils (11a) mit einer ersten Seite (C1) des Rechtecks des zweiten Teils (11b) verbunden ist.

5. Vorrichtung nach Anspruch 4,
**dadurch gekennzeichnet, dass** der erste Zweig (18a) des ersten elastischen Elements (13a) so am zweiten Teil (11b) der Platte (11) befestigt ist, dass der erste Zweig (18a) des ersten elastischen Elements (13a) an einer zur ersten Seite (C1) des Rechtecks senkrechten zweiten Seite (C2) des Rechtecks befestigt ist, wobei der erste Zweig (18a) des zweiten elastischen Elements (13b) so am zweiten Teil (11b) der Platte (11) befestigt ist, dass der erste Zweig (18a) des zweiten elastischen Elements (13b) an einer der zweiten Seite (C2) des Rechtecks gegenüberliegenden dritten Seite (C3) des Rechtecks befestigt ist, wobei die Gegenlippe (12) an der großen Grundseite (GB) des Trapezes befestigt ist.

6. Vorrichtung nach einem der Ansprüche 1 bis 5, **dadurch gekennzeichnet, dass** die Platte (11) zumindest teilweise aus einem transparenten Material gefertigt ist.

7. Vorrichtung nach einem der Ansprüche 4 bis 6, **dadurch gekennzeichnet, dass** zumindest der erste Teil (11a) der Platte (11) aus einem transparenten Material gefertigt ist.

8. Vorrichtung nach einem der Ansprüche 4 bis 7, **dadurch gekennzeichnet, dass** die Gegenlippe (12) und der zweite Teil (11b) auf einer gleichen Seite (11c) des ersten Teils (11a) befestigt sind, wobei die Seite (11c) des ersten Teils (11a) dazu bestimmt ist, in das Innere des Lufteinlasses (1) gerichtet zu sein, wenn die Sicherungsvorrichtung (3) am Lufteinlass (1) installiert ist.

9. Verfahren zur Installation der Sicherungsvorrichtung nach einem der Ansprüche 1 bis 8, **dadurch gekennzeichnet, dass** es die folgenden Schritte umfasst:
- einen Schritt (E1) des Anlegens der Gegenlippe (12) an die Lippe (8);
- einen Schritt (E2) des Ausübens einer Kraft auf jedes der elastischen Elemente (13a, 13b), damit die Platte (11) den Lufteinlass (1) zumindest teilweise verschließt;
- einen Schritt (E3) des Aufhebens der auf jedes der elastischen Elemente (13a, 13b) ausgeübten Kraft, damit jedes der elastischen Elemente (13a, 13b) jeweils eine Kraft gegen die beiden Seitenwände (6a, 6b) ausübt, um die Gegenlippe (12) gegen die Lippe (8) zu drücken, wenn die Vorrichtung (3) im Lufteinlass (1) installiert ist.

10. Verfahren nach Anspruch 9,
**dadurch gekennzeichnet, dass** der Schritt (E2) des Ausübens darin besteht, eine Kraft auf die Auflagefläche (17) des dritten Zweigs (18c) jedes der elastischen Elemente (13a, 13b) auszuüben.

## Claims

1. Device (3) for securing an air intake (1) through a flow surface (2), the air intake (1) being intended to guide at least a part of a flow of air flowing over the flow surface (2) towards a duct inlet (4) situated beneath the flow surface (2), the air intake (1) comprising an opening (7) made on the flow surface (2), a ramp (5) and at least two lateral walls (6a, 6b), the opening (7) being delimited by a lip (8) and two lateral edges (9), the two lateral edges (9) extending symmetrically on either side of the lip (8) while gradually converging towards one another, the lateral walls (6a, 6b) extending respectively between the lateral edges (9) and the ramp (5), the ramp (5) extending between the flow surface (2) and a region beneath the flow surface (2), the duct inlet (4) being defined between the lip (8) and the ramp (5), **characterized in that** it comprises at least one plate (11) intended to at least partially close off the opening (7), the plate (11) being provided with a counter-lip (12) and at least two elastic elements (13a, 13b) configured to exert a force respectively against the two lateral walls (6a, 6b) in order to press the counter-lip (12) against the lip (8) when the device (3) is installed in the air intake (1).

2. Device according to Claim 1,
**characterized in that** each of the at least two elastic elements (13a, 13b) has a first arm (18a) and a second arm (18b) that each have a free end (14a, 14b), which ends diverge from one another so as to form a V-shaped leaf spring,
the first arm (18a) of a first elastic element (13a) of the at least two elastic elements (13a, 13b) being fastened to a first edge (16a) of the plate (11), the second arm (18b) of the first elastic element (13a) being configured to exert a force against a first wall (6a) of the at least two lateral walls (6a, 6b) when the device (3) is installed in the air intake (1),
the first arm (18a) of a second elastic element (13b) of the at least two elastic elements (13a, 13b) being fastened to a second edge (16b) of the plate that is symmetrical to the first edge (16a) of the plate (11), the second arm (18b) of the second elastic element (13b) being configured to exert a force against a second wall (6b) of the at least two lateral walls (6a, 6b) when the device (3) is installed in the air intake (1),
the force exerted against the first wall (6a) and the force exerted against the second wall (6b) being likely to press the counter-lip (12) against the lip (8).

3. Device according to Claim 2,
**characterized in that** each of the at least two elastic elements (13a, 13b) comprises a third arm (18c), the third arm (18c) being as one with the second arm (18b), the third arm (18c) having a free end (14c) that diverges from the second arm (18b) towards the first arm (18a), the third arm (18c) having a bearing surface (17), the bearing surface (17) being configured to exert a force allowing the free end (14b) of the second arm (18b) to be moved closer to the first arm (18a).

4. Device according to any one of Claims 1 to 3, **characterized in that** the plate (11) comprises at least two parallel parts (11a, 11b) including a first part (11a) and a second part (11b), the first part (11a) of the plate (11) having the overall shape of an isosceles trapezium that has a large base (GB) and a small base (PB), the second part (11b) of the plate (11) having the overall shape of a rectangle, the first part (11a) being fastened to the second part (11b) such that the small base (PB) of the trapezium of the first part (11a) is connected to a first side (C1) of the rectangle of the second part (11b).

5. Device according to Claim 4,
**characterized in that** the first arm (18a) of the first elastic element (13a) is fastened to the second part (11b) of the plate (11) such that the first arm (18a) of the first elastic element (13a) is fastened to a second side (C2) of the rectangle that is perpendicular to the first side (C1) of the rectangle, the first arm (18a) of the second elastic element (13b) being fastened to the second part (11b) of the plate (11) such that the first arm (18a) of the second elastic element (13b) is fastened to a third side (C3) of the rectangle that is opposite the second side (C2) of the rectangle, the counter-lip (12) being fastened to the large base (GB) of the trapezium.

6. Device according to any one of Claims 1 to 5, **characterized in that** the plate (11) is manufactured, at least in part, from a transparent material.

7. Device according to any one of Claims 4 to 6, **characterized in that** at least the first part (11a) of the plate (11) is manufactured from a transparent material.

8. Device according to any one of Claims 4 to 7, **characterized in that** the counter-lip (12) and the second part (11b) are fastened to one and the same face (11c) of the first part (11a), said face (11c) of the first part (11a) being intended to be directed towards the inside of the air intake (1) when the securing device (3) is installed on the air intake (1).

9. Method for installing the securing device according to any one of Claims 1 to 8,
**characterized in that** it comprises the following steps:
- a step (E1) of affixing the counter-lip (12) to the lip (8);
- a step (E2) of applying a force to each of the elastic elements (13a, 13b) so that the plate (11) at least partially closes off the air intake (1);
- a step (E3) of releasing the force applied to each of the elastic elements (13a, 13b) so that each of the elastic elements (13a, 13b) exerts a force respectively against the two lateral walls (6a, 6b) in order to press the counter-lip (12) against the lip (8) when the device (3) is installed in the air intake (1).

10. Method according to Claim 9,
**characterized in that** the application step (E2) consists in exerting a force on the bearing surface (17) of the third arm (18c) of each of the elastic elements (13a, 13b).
